# EUROPEAN PATENT APPLICATION

(11) **EP 4 682 718 A1**
(43) Date of publication of application: **21.01.2026**
(21) Application number: 24791917.8
(22) Date of filing: 11.04.2024
(51) Int. Cl.: G06F 9/48

(54) **TASK STEALING METHOD AND APPARATUS, CHIP, AND COMPUTER DEVICE**

(30) Priority: 21.04.2023 CN 202310471525
(71) Applicant: Huawei Technologies Co., Ltd., Shenzhen, Guangdong 518129 (CN)
(72) Inventor: LIU, Yutao, Shenzhen, Guangdong 518129 (CN); WANG, Jiawei, Shenzhen, Guangdong 518129 (CN); FU, Ming, Shenzhen, Guangdong 518129 (CN)
(74) Representative: MERH-IP Matias Erny Reichl Hoffmann Patentanwälte PartG mbB
(86) International application number: PCT/CN2024/087294
(87) International publication number: WO 2024/217332

(57) **Abstract**

A task stealing method and apparatus, a chip, and a computer device are disclosed, and relate to the computer field. The computer device includes a plurality of processor cores, the plurality of processor cores include a first processor core and a second processor core, the method is performed by the first processor core, and the method includes: when a ring queue associated with the first processor core is empty, stealing a to-be-processed first task from a first block that has stealing permission and that is in a ring queue associated with the second processor core, and processing the first task. In this way, block management is performed, by using a block management mechanism, on the ring queue associated with the processor core, so that the task is allowed to be stolen starting from the block that has the stealing permission and that is in the ring queue, and a write operation or an obtaining operation may also be performed on another block in the ring queue. Compared with obtaining a task from a queue head or a queue tail of the ring queue, this reduces a possibility that different processor cores compete to perform different operations on a same ring queue, thereby improving system performance and reliability of task stealing.

## Description

This application claims priority to Chinese Patent Application No. 202310471525.2, filed with the China National Intellectual Property Administration on April 21, 2023 and entitled "TASK STEALING METHOD AND APPARATUS, CHIP, AND COMPUTER DEVICE", which is incorporated herein by reference in its entirety.

### TECHNICAL FIELD

This application relates to the computer field, and in particular, to a task stealing method and apparatus, a chip, and a computer device.

### BACKGROUND

In a scenario in which a plurality of processor cores process tasks concurrently, a load balancing mechanism is used to evenly distribute, on a limited number of cores, tasks (task) that exceed the number of cores as much as possible, to improve overall task processing efficiency of a system, and avoid a case in which some processor cores are overloaded (overload) and some processor cores are idle (idle). For example, an idle processor core selects a non-idle processor core, and steals a task from a ring queue of the non-idle processor core, that is, the task is scheduled from the non-idle processor core to the idle processor core for execution, thereby improving overall load balancing of the system. The processor core may further write a task into the ring queue or obtain a task from the ring queue for processing. However, the processor core needs to perform a write operation, an obtaining operation, and a stealing operation based on global metadata of the ring queue. In addition, when the processor core performs the stealing operation, the write operation and the obtaining operation may experience a cache miss. As a result, performance overheads of the system are high. Therefore, how to improve system performance and reliability of task stealing is an urgent problem to be resolved.

### SUMMARY

This application provides a task stealing method and apparatus, a chip, and a computer device, to improve system performance and reliability of task stealing.

According to a first aspect, a task stealing method is provided, applied to a processor core in a computer device. For example, the computer device includes a plurality of processor cores, the plurality of processor cores include a first processor core and a second processor core, the method is performed by the first processor core, and the method includes: when a ring queue associated with the first processor core is empty, stealing a to-be-processed first task from a first block that has stealing permission and that is in a ring queue associated with the second processor core, and processing the first task, where the ring queue associated with the second processor core includes a plurality of blocks, and a block having the stealing permission and a block having obtaining permission in the plurality of blocks are not a same block.

In this way, block management is performed, by using a block management mechanism, on the ring queue associated with the processor core, so that "middle stealable" of the ring queue is implemented, that is, the task is allowed to be stolen starting from the block that has the stealing permission and that is in the ring queue, and a write operation or an obtaining operation may also be performed on another block in the ring queue. Compared with stealing a task from a queue head or a queue tail of the ring queue, this reduces a possibility that different processor cores compete to perform different operations on a same ring queue, thereby improving system performance and reliability of task stealing.

In a possible implementation, stealing the to-be-processed first task from the first block that has the stealing permission and that is in the ring queue associated with the second processor core includes: stealing the first task based on a stealing position in the first block, where the stealing position indicates a stealing start position in the first block.

In another possible implementation, after stealing the to-be-processed first task from the first block that has the stealing permission and that is in the ring queue associated with the second processor core, the method further includes: updating the stealing position and a stealing counter in the first block, where the stealing counter indicates a number of completed task stealing.

Therefore, the block management mechanism based on intra-block metadata (intra-block local variable) implements the "middle stealable" of the ring queue. Compared with stealing a task based on global metadata (global variable of the ring queue) of the ring queue, this effectively reduces synchronization overheads and improves the system performance.

In another possible implementation, stealing the to-be-processed first task from the first block that has the stealing permission and that is in the ring queue associated with the second processor core includes: selecting the second processor core from the plurality of processor cores based on a processor core selection mode, and randomly selecting the first block from the ring queue associated with the second processor core for stealing the first task. The processor core selection mode includes any one of non-uniform memory access-aware (non-uniform memory access, NUMA-aware) architecture, equal probability, and randomness.

In another possible implementation, selecting the second processor core from the plurality of processor cores based on the processor core selection mode includes: selecting a third processor core from the plurality of processor cores based on the processor core selection mode; and when a third block is randomly selected from a ring queue associated with the third processor core, and the third block does not have the stealing permission, selecting the second processor core from the plurality of processor cores based on the processor core selection mode.

In this way, the processor core can obtain the intra-block local variable through random sampling, so that a long ring queue is stolen with a high probability on a premise that impact of a stealing operation of the processor core on read/write contention of the ring queue is minimized, thereby improving the system performance.

In another possible implementation, stealing the first task based on the stealing position in the first block includes: when a stealing position of a second block in the ring queue associated with the second processor core indicates a block boundary of the second block, stealing the first task based on the stealing position and a round identifier in the first block adjacent to the second block.

In another possible implementation, the method further includes: updating the round identifier of the first block based on a round identifier of the second block.

Therefore, the reliability of task stealing is ensured through a small number of synchronization operations in inter-block operations and a delicate round control mechanism, and round identifier update each time depends only on a round value of an adjacent block of a block. This avoids dependence on the global metadata, and improves round update performance.

In another possible implementation, the method further includes: switching the stealing permission of the first block to the obtaining permission based on an obtaining request; and obtaining a to-be-processed second task from the first block based on a front position and a back position in the first block, where the front position and the back position indicate an obtaining position.

In this way, different permission is assigned to the blocks in the ring queue by using the block management mechanism based on the intra-block metadata. A takeover (takeover) mechanism is used in the inter-block operations. To be specific, when a task needs to be obtained for the block in the ring queue, permission transfer is performed, that is, the stealing permission is switched to the obtaining permission, to avoid performing the obtaining operation and the stealing operation on a same block, and avoid most synchronization overheads in an intra-block operation, cause a system throughput to be close to a throughput of a serial queue, and improve the system performance and the reliability of task stealing.

In another possible implementation, before stealing the to-be-processed first task from the first block that has the stealing permission and that is in the ring queue associated with the second processor core, the method further includes: writing the first task and the second task into the first block based on the back position of the first block, and switching write permission of the first block to the stealing permission, where the back position indicates a write position.

In this way, different permission is assigned to the blocks in the ring queue by using the block management mechanism based on the intra-block metadata. A grant (grant) mechanism is used in the inter-block operations. To be specific, after a task is written into the block in the ring queue, permission transfer is performed, that is, the write permission is switched to the stealing permission, so that the processor core can start stealing from the block that has the stealing permission and that is in the ring queue. This reduces the possibility that different processor cores compete to perform different operations on the same ring queue, thereby improving the system performance and the reliability of task stealing.

According to a second aspect, a task stealing apparatus is provided. The apparatus includes modules configured to perform the method according to the first aspect or any possible design of the first aspect. For example, the task stealing apparatus includes a stealing module, an obtaining module, and a write module.

The stealing module is configured to: when a ring queue associated with a first processor core is empty, steal a to-be-processed first task from a first block that has stealing permission and that is in a ring queue associated with a second processor core, where the ring queue associated with the second processor core includes a plurality of blocks, and a block having the stealing permission and a block having obtaining permission in the plurality of blocks are not a same block.

The obtaining module is configured to: switch the stealing permission of the first block to the obtaining permission based on an obtaining request; and obtain a to-be-processed second task from the first block based on a front position and a back position in the first block, where the front position and the back position indicate an obtaining position.

The write module is configured to: write the first task and the second task into the first block based on the back position of the first block, and switch write permission of the first block to the stealing permission, where the back position indicates a write position.

According to a third aspect, a chip is provided, including a processor and a power supply circuit. The power supply circuit is configured to supply power to the processor, and the processor is configured to perform operation steps of the method according to the first aspect or any possible implementation of the first aspect.

According to a fourth aspect, a processor is provided, including a plurality of processor cores, and the processor core is configured to perform operation steps of the method according to the first aspect or any possible implementation of the first aspect.

According to a fifth aspect, a computer device is provided. The computer device includes a processor and a memory, the processor includes a plurality of processor cores, the memory is configured to store a group of computer instructions, and when executing the group of computer instructions, the processor core performs operation steps of the method according to the first aspect or any possible implementation of the first aspect.

According to a sixth aspect, a computer-readable storage medium is provided, including computer software instructions. When the computer software instructions are run on a computer device, the computer device is enabled to perform operation steps of the method according to the first aspect or any possible implementation of the first aspect.

According to a seventh aspect, a computer program product is provided. When the computer program product runs on a computer, a computer device is enabled to perform operation steps of the method according to the first aspect or any possible implementation of the first aspect.

For technical effect brought by any design manner in the second aspect to the seventh aspect, refer to the technical effect brought by the first aspect or different design manners in the first aspect. Details are not described herein again.

In this application, based on the implementations according to the foregoing aspects, the implementations may be further combined to provide more implementations.

### BRIEF DESCRIPTION OF DRAWINGS

FIG. 1 is a diagram of a task stealing mechanism according to a conventional technology;
FIG. 2 is a diagram of composition of a computer device according to this application;
FIG. 3 is a diagram of an enqueue operation and a dequeue operation of a block-based ring queue according to this application;
FIG. 4 is a diagram of an application scenario of task stealing according to this application;
FIG. 5 is a schematic flowchart of a task stealing method according to this application;
FIG. 6 is a diagram of intra-block operations according to this application;
FIG. 7 is a diagram of updating a round identifier according to this application;
FIG. 8 is a diagram of round control according to this application;
FIG. 9(a) and FIG. 9(b) are a diagram of inter-block operations according to this application;
FIG. 10 is a diagram of a task stealing scenario according to this application;
FIG. 11 is a diagram of another task stealing scenario according to this application; and
FIG. 12 is a diagram of a structure of a task stealing apparatus according to this application.

### DESCRIPTION OF EMBODIMENTS

For ease of description, terms in this application are first briefly described.

In a hierarchical structure of a computer storage system, a closer memory to a central processing unit (central processing unit, CPU) indicates a faster access speed and a smaller storage capacity. Memories are classified into a register, a cache, a main memory, and a magnetic disk in an ascending order of distances to the CPU.

**The main memory (main memory)** is also referred to as an internal memory, and is briefly referred to as a main memory or a memory (memory). The main memory is an important component of a computer system, namely, a bridge for communication between an external memory and a central processing unit (central processing unit, CPU). The main memory is configured to temporarily store computing data in the CPU and data exchanged between the CPU and the external memory, for example, a hard disk. For example, a computer starts to run, and loads data that needs to be computed from the main memory to the CPU for computation. After the computation is completed, the CPU stores a computation result in the main memory. For example, the main memory includes a dynamic random access memory (dynamic random access memory, DRAM) and a double data rate synchronous dynamic random access memory (double data rate synchronous DRAM, DDR SDRAM).

**The external memory** is also referred to as a secondary memory, and is briefly referred to as an external memory or a secondary memory. The external memory has a larger storage capacity and a lower access speed than the main memory. For example, the external memory includes a network memory, a solid-state drive (solid state disk or solid-state drive, SSD), and a hard disk drive (hard disk drive, HDD).

**The cache (cache)** is a high-speed and small-capacity memory between the CPU and the main memory. The cache is briefly referred to as a cache. The cache has a smaller storage capacity and a higher access speed than the main memory. The cache includes a level 1 cache (L1 cache), a level 2 cache (L2 cache), and a level 3 cache (L3 cache). The level 1 cache is disposed inside a processor core. The level 2 cache may be disposed inside or outside the processor core. The level 1 cache and the level 2 cache are usually exclusive (exclusive) to the processor cores in which the level 1 cache and level 2 cache are located. The level 3 cache is usually disposed outside the processor core and is shared (shared) by a plurality of processor cores.

**A cache line (cache line)** is a unit in which a computer device performs a read operation or a write operation on storage space of a memory. For example, a size of one cache line may be 64 bytes (bytes, B).

**A memory block (memory block)** has a same size as a cache line, and is a minimum unit for data exchange between the cache and the main memory. The size of the memory block is limited by a length of data that can be accessed in a clock cycle of the main memory.

**A queue (buffer/queue)** is a linear table with restricted operations. The restriction is that a delete operation is performed at a front (front) end of the table and an insert operation is performed at a back (back) end of the table. An operation of processing the queue may be referred to as first-in first-out (first-in first-out, FIFO). Queues include a sequential queue and a ring queue.

**A ring queue (ring buffer/ring queue)** connects a head and a tail of a sequential queue, and logically considers a linear table as a ring. The ring queue may be understood as a segment of storage space in the memory, and a last position of the storage space is connected to a first position, to form logical ring-shaped space.

**A stack (stack)** is also referred to as a stack, is a linear table with restricted operations, and the restriction lies in that insert and delete operations are performed at a tail of the table. The table tail may be referred to as a stack top, and correspondingly, a table head may be referred to as a stack bottom. Inserting a new element into a stack is also referred to as putting the new element into the stack, placing the new element into the stack, or pushing the new element into the stack, and the new element is placed above a top element of the stack, so that the new element becomes a new top element of the stack. Deleting an element from a stack is also referred to as pulling the element from the stack or popping the element from the stack. An element at a stack top is deleted, so that an element adjacent to the element becomes a new top element of the stack. An operation of processing the stack may be referred to as last-in first-out (last-in first-out, LIFO).

**In a weak memory model (weak memory model, WMM),** in an architecture defined by a specific combination of a processor core and a tool chain, a memory access sequence executed by a program may be inconsistent with a code writing order. An architecture in which any memory access rearrangement exists is referred to as a weak memory ordering architecture, and a rearrangement rule of the architecture is referred to as a weak memory model.

**Memory barriers (memory barriers)** refer to a type of synchronization barrier instructions, which enable a processor or a compiler to perform operations on a memory strictly in a specific order, that is, an instruction before the memory barrier and an instruction after the memory barrier are not to be out of order due to system optimization or other reasons. This is also a basic means for preventing a program semantic error caused by weak memory ordering rearrangement. In addition, the memory barriers are classified into different levels of barriers based on assurance degrees and performance overheads. The memory barriers are classified into a sequential barrier (sequential barrier), an acquire barrier (acquire barrier), a release barrier (release barrier), and a relaxed barrier (relaxed barrier) in descending order of performance overheads.

**Concurrency control** is a mechanism that prevents or corrects, in time, errors that may be caused by concurrent operations.

**An atomic operation** is a classic concurrency control mechanism, which refers to an operation that is not interrupted by a thread scheduling mechanism. Once the operation starts, the operation runs until the operation ends, and is not switched to another thread during running.

**Compare and swap (compare and swap, CAS)** is an atomic operation, and is used to implement an uninterrupted data swap operation in multi-thread programming, to avoid data inconsistency caused by uncertainty of an execution order and unpredictability of an interrupt when a plurality of threads simultaneously rewrite a piece of data.

**Each task (work)** is a segment of execution logic. Execution time varies with complexity of the execution logic, there may be logical dependency or data dependency between tasks, and a task may generate subtasks during running.

**Task stealing (work stealing)** is a dynamic task scheduling mechanism. To be specific, when a ring queue associated with a processor core is empty, a task is stolen from a ring queue associated with a non-idle processor core.

The processor core may serve as an owner (owner) of a ring queue associated with the processor core. The processor core or a thread run by the processor core may be referred to as a worker (worker), and the worker may play different roles when performing different operations.

For example, the processor core serves as a producer (producer), and writes a task into the ring queue based on a write (put) operation.

The processor core serves as a consumer (consumer), and obtains a task from the ring queue based on an obtaining (get) operation and executes the task.

The processor core serves as a thief (thief), and steals, based on a stealing (stealing) operation, a task from a ring queue associated with another processor core, and executes the task.

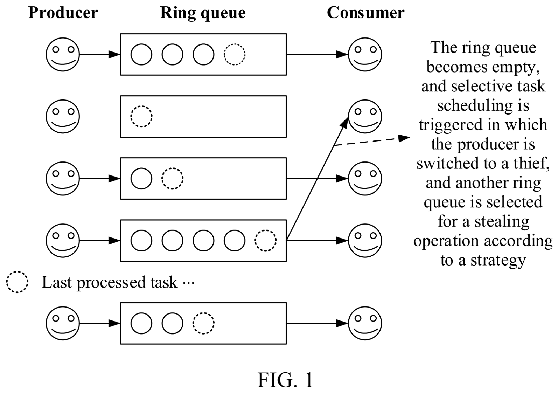

For example, as shown in FIG. 1, a producer is responsible for writing a new task into a ring queue, and a subtask is also written in a task execution process. A consumer is responsible for obtaining tasks from the ring queue in order and executing the tasks. In a running process of an entire system, ring queues associated with some processor cores have a plurality of to-be-processed tasks, and ring queues associated with some processor cores are idle.

When a ring queue is empty, a processor core performs role switching, that is, the consumer switches to a thief, and steals a task from a ring queue associated with another processor core. This means to schedule the task from an original processor core to a new idle processor core for execution, thereby improving overall load balancing of the system.

The ring queue is bottom-level logic implementation of a task stealing mechanism. An enqueue operation on the ring queue includes a write operation on the task, and a dequeue operation on the ring queue includes an obtaining operation and a stealing operation on the task. In addition, due to existence of the thief, a case in which a plurality of processor cores simultaneously access one ring queue may occur. Therefore, concurrency control is performed on the ring queue in the system running process, that is, correctness of simultaneous access of the plurality of processor cores to the ring queue is ensured.

In a task scheduling scenario, mechanisms for enqueuing and dequeuing tasks in the ring queue vary with top-level logic of different applications. For an application scenario focusing on overall execution efficiency (for example, a multi-thread fork-join program in a concurrent computing scenario), tasks are processed in a last-in first-out order. For an application scenario focusing on a task processing delay (for example, network packet processing), tasks are processed in a first-in first-out order.

Compared with that of a sequential queue, implementation of the ring queue is more complex. In a task stealing scenario, the ring queue is mainly implementation of a single producer and multiple consumers (single producer and multiple consumers, SPMC). There are the following concurrency cases: concurrency between the producer and the thief (put-steal), concurrency between the consumer and the thief (get-steal), and concurrency between thieves (steal-steal). A complex case like competition may occur between these related operations. Especially in a weak memory model, a read/write order is uncertain, which brings great difficulty to implementation.

To resolve a problem that system performance and reliability of task stealing are low, this application provides a task stealing method. To be specific, when a ring queue associated with a first processor core is empty, a to-be-processed first task is stolen from a first block that has stealing permission and that is in a ring queue associated with a second processor core. The ring queue associated with the second processor core includes a plurality of blocks, and a block having the stealing permission and a block having obtaining permission in the plurality of blocks are not a same block. Because block management is performed on the ring queue, the task is allowed to be stolen starting from the block that has the stealing permission and that is in the ring queue, and a write operation or an obtaining operation may also be performed on another block in the ring queue. This implements "middle stealable" of the ring queue, and reduces a possibility that different processor cores compete to perform different operations on a same ring queue, thereby improving the system performance and the reliability of task stealing.

The following describes implementations of this application in detail with reference to accompanying drawings.

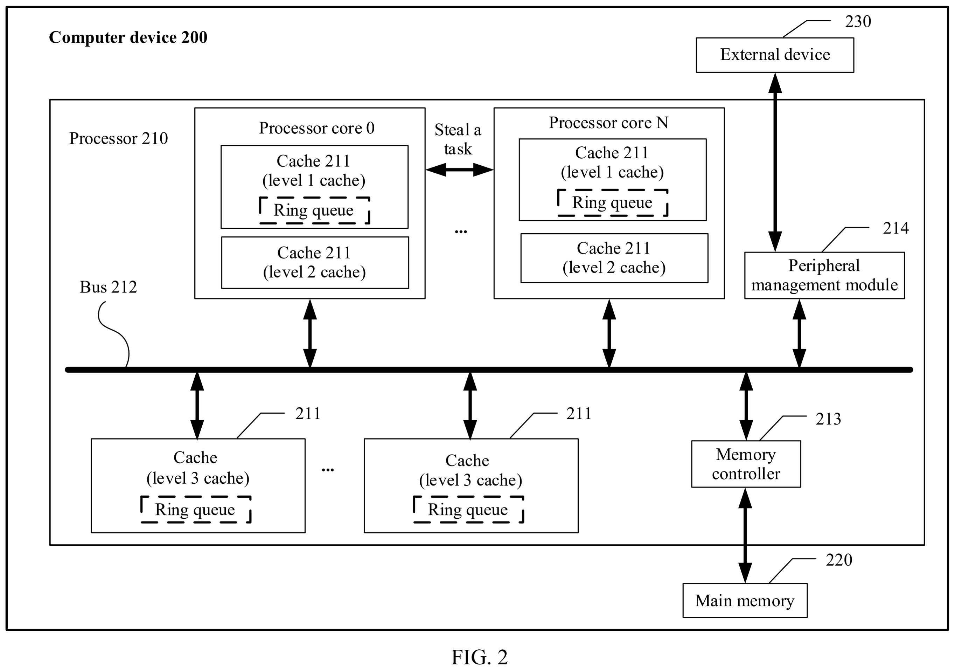

FIG. 2 is a diagram of composition of a computer device according to this application. As shown in FIG. 2, the computer device 200 includes a processor 210, a main memory 220, and a cache 211.

The processor 210 is a control center of the computer device 200. The processor 210 may be a computing unit having a computing capability, for example, a central processing unit (central processing unit, CPU), a graphics processing unit (graphics processing unit, GPU), a data processing unit (data processing unit, DPU), or a neural processing unit (neural processing unit, NPU).

In some embodiments, the processor 210 includes a plurality of processor cores (core). For example, the processor 210 shown in FIG. 2 includes N processor cores. The plurality of processor cores may run a plurality of threads, and process a plurality of different tasks concurrently, to improve processing performance of a system.

The cache 211 is configured to store instructions or data that may be accessed by the processor core in the processor 210 a plurality of times. Therefore, a data processing speed of the processor is improved, and it is avoided that the processor frequently accesses the main memory 220.

In this application, the cache 211 may be configured to provide storage space of a ring queue associated with the processor core. The processor core performs block management on the ring queue, that is, divides the storage space of the ring queue into a plurality of blocks (block), and performs an enqueue operation and a dequeue operation on the ring queue based on the block. For ease of description, a block in this application may also be referred to as a block.

An enqueue operation and a dequeue operation performed inside the block may be referred to as an intra-block operation or a fast path. An enqueue operation and a dequeue operation performed between the blocks may be referred to as an inter-block operation or a slow path. If the enqueue operation or the dequeue operation cannot be performed on the block, inter-block migration (adv_blk) is performed, and the enqueue operation or the dequeue operation is performed on a next block, that is, switching from the fast path to the slow path.

In a task stealing scenario, the processor core may assign write permission, obtaining permission, or stealing permission to the blocks in the ring queue. The processor core may perform a write operation on a block having the write permission, perform an obtaining operation on a block having the obtaining permission, and perform a stealing operation on a block having the stealing permission. In this way, different permission is assigned to the blocks in the ring queue, to implement synchronization (synchronization) between different operations in the ring queue, and ensure correctness and efficiency of reading and writing tasks in the ring queue.

In a block design, the write operation, the obtaining operation, and the stealing operation may be divided into the fast path (intra-block operation) and the slow path (inter-block operation, inter-block migration (adv_blk)), to avoid most synchronization overheads on the fast path, and ensure global correctness through a small number of synchronization operations on the slow path. It should be noted that when the intra-block operation and the inter-block operation are performed, it is ensured that the following rules are observed:
(1) The write operation does not overwrite a task that is not consumed.
(2) Tasks in a same block are not simultaneously obtained through the stealing operation and the obtaining operation.
(3) A task that is already obtained is not obtained through the stealing operation and the obtaining operation.
(4) An ongoing stealing operation cannot avoid obtaining the tasks in the same block through the obtaining operation. If this situation occurs, according to (2), the stealing operation stops stealing data from the block.

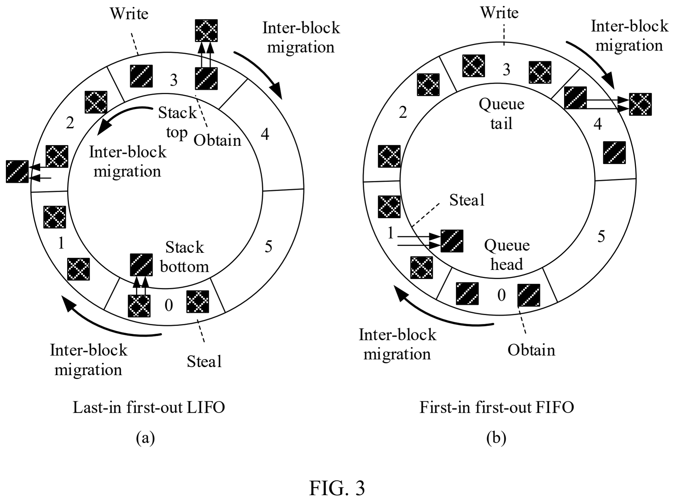

For example, FIG. 3 is a diagram of an enqueue operation and a dequeue operation of a block-based ring queue according to this application. A ring queue based on a last-in first-out mode is shown in (a) in FIG. 3. The ring queue includes six blocks, namely, a block 0 to a block 5. Starting from a head of the queue (the block 0), tasks are written into the blocks in the ring queue in order. When a block is fully written, inter-block migration is performed to write a task into a next block. As shown in the figure, the block 0 to the block 2 are fully written blocks. After the block 3 is fully written, inter-block migration (adv_blkₚᵤₜ) is performed, and a task may be written into the block 4.

Because the ring queue is in the last-in first-out mode, the block 0 into which a task is first written is used as a stack bottom, and the block 3 into which a task is later written is used as a stack top. When a task is obtained from the ring queue, the task is obtained from the stack top. For example, write permission of the block 3 is switched to obtaining permission, and an obtaining operation is performed on the task in the block 3.

Because the obtaining operation and a write operation cannot be performed on the fully written block, grant (grant) is performed, that is, a stealing operation is allowed to be performed on the fully written block. For example, the write permission of the block 0 to the block 2 is switched to stealing permission. After the block 3 is fully written, inter-block migration is performed, and the write permission of the block 3 is switched to the stealing permission.

If the task in the block 3 has been obtained and task obtaining needs to continue, inter-block migration (adv_blk_{get}) and takeover (takeover) are performed, that is, the stealing permission of the block 2 is switched to the obtaining permission, and a task is obtained from the block 2.

If the task in the block 0 has been stolen and task stealing needs to continue, inter-block migration (adv_blkₛₜₑₐₗ) is performed to steal a task from the block 1.

A ring queue based on a first-in first-out mode is shown in (b) in FIG. 3. The ring queue includes six blocks, namely, a block 0 to a block 5. Starting from a head of the queue (the block 0), tasks are written into the blocks in the ring queue in order. When a block is fully written, inter-block migration is performed to write a task into a next block. As shown in the figure, the block 0 to the block 2 are fully written blocks. After the block 3 is fully written, inter-block migration (adv_blkₚᵤₜ) is performed, and a task may be written into the block 4.

Because the ring queue is in the first-in first-out mode, the block 0 into which a task is first written is used as a queue head, and the block 3 into which a task is later written is used as a queue tail. When a task is obtained from the ring queue, the task is obtained from the queue head. For example, write permission of the block 0 is switched to obtaining permission, and an obtaining operation is performed on the task in the block 0.

If the task in the block 0 has been obtained and task obtaining needs to continue, inter-block migration (adv_blk_{ger}) and takeover (takeover) are performed, that is, stealing permission of the block 1 is switched to the obtaining permission, and a task is obtained from the block 1.

Because the obtaining permission is higher than the stealing permission, grant is performed on a block into which the task is written, that is, a stealing operation is allowed to be performed on the block into which the task is written. For example, the write permission of the block 3 is switched to the stealing permission, and the stealing operation is performed on the task in the block 3.

Because a write operation cannot be performed on the fully written block, if task stealing needs to continue, grant (grant) may also be performed, that is, the stealing operation is allowed to be performed on the fully written block. For example, the write permission of the block 1 and the block 2 is switched to the stealing permission. After the block 3 is fully written, inter-block migration (adv_blkₚᵤₜ) is performed, and the write permission of the block 3 is switched to the stealing permission.

In this way, takeover and grant in an inter-block operation ensure that the stealing operation and the obtaining operation are not performed on a same block, and each block is either occupied by a consumer or occupied by a thief at a time point, thereby improving system performance and reliability of task stealing.

In a physical form, the cache 211 may be a random access memory (random access memory, RAM), a static random access memory (static random access memory, SRAM), a dynamic random access memory (dynamic RAM, DRAM), or another type of storage device that can store information and instructions.

In a logical form, the cache 211 may be a level 1 cache (L1 cache), a level 2 cache (L2 cache), a level 3 cache (L3 cache), or a cache device at any level. For example, as shown in FIG. 2, the cache 211 disposed inside the processor core may be a level 1 cache (L1 cache) and a level 2 cache (L2 cache). The cache 211 disposed outside the processor core may be a level 3 cache (L3 cache).

The processor core is connected to the cache 211 through bus 212, and accesses the cache 211 through the bus 212. For example, the processor core transmits a write instruction or a read instruction to the cache 211 through the bus 212, so that the cache 211 performs a write operation on a block in the ring queue based on the write instruction or performs a read operation on a block in the ring queue based on the read instruction. The bus 212 may be an industry standard architecture (industry standard architecture, ISA) bus, a peripheral component interconnect (peripheral component, PCI) bus, an extended industry standard architecture (extended industry standard architecture, EISA) bus, a private bus standard of a non-standard architecture, or the like. The bus may be classified into an address bus, a data bus, a control bus, and the like. For ease of indication, the bus is indicated by only one thick line in FIG. 2, but this does not indicate that there is only one bus or one type of bus.

A connection manner between the processor core and the cache 211 in FIG. 2 is merely an example for description. In a possible implementation, the processor core is connected to the cache 211 through a ring bus (ring bus), and accesses the cache 211 through the ring bus. In another possible implementation, the processor core and the cache 211 are connected through a mesh bus (mesh bus), and the processor core accesses the cache 211 through the mesh bus.

The processor 210 is connected to the main memory 220 via a memory controller (memory controller, MC) 213. The processor 210 may perform various functions of the computer device 200 by running or executing a software program stored in the main memory 220 and invoking data stored in the main memory 220. For example, the processor 210 writes the data in the ring queue back to the main memory 220 via the memory controller (memory controller, MC) 213.

The main memory 220 may be a read-only memory (read-only memory, ROM) or another type of static storage device that can store static information and instructions, may be a random access memory (random access memory, RAM) or another type of dynamic storage device that can store information and/or instructions, may be an electrically erasable programmable read-only memory (electrically erasable programmable read-only memory, EEPROM), or the like. The main memory 220 is further configured to store a program related to embodiments and the data related to the ring queue.

The processor 210 may further include an external device (external device) 230 and a peripheral management module 214. The external device 230 is connected to the peripheral management module 214 through the bus 212. The external device 230 may be an application-specific integrated circuit (application-specific integrated circuit, ASIC), for example, a microprocessor (digital signal processor, DSP), or one or more field programmable gate arrays (field programmable gate array, FPGA), or a graphics processing unit (graphics processing unit, GPU), or a neural-network processing unit (neural-network processing unit, NPU). The external device 230 may also transmit a write instruction or a read instruction to the cache 211 through the bus 212, so that the cache 211 performs a write operation on a block in the ring queue based on the write instruction or performs a read operation on a block in the ring queue based on the read instruction.

The structure of the device shown in FIG. 2 does not constitute a limitation on the computer device. The device may include more or fewer components than those shown in the figure, a combination of some components, or a different component layout.

The task stealing method provided in this application may be widely applied to a language runtime (for example, a garbage collection mechanism and a thread library for a Java runtime, a thread library for a Rust Tokio runtime, goroutine for a Go runtime, and runtimes for other programming languages such as Cilk and Kotlin), an operating system (for example, an Intel OneAPI thread building blocks (Thread Building Blocks, TBB) thread/task (Thread/Task)-related library, FreeBSD SKQ, data plane development kit (Data Plane Development Kit, DPDK) Shenango, and other network stacks), a parallel computing framework (for example, an OpenMP high-performance computing framework and a TaskFlow parallel heterogeneous programming framework), a heterogeneous system running environment (for example, a compute unified device architecture (Compute Unified Device Architecture, CUDA)), and a key component like an open computing language (Open Computing Language, OpenCL), and are mainly responsible for load balancing of computing resources in a concurrency scenario.

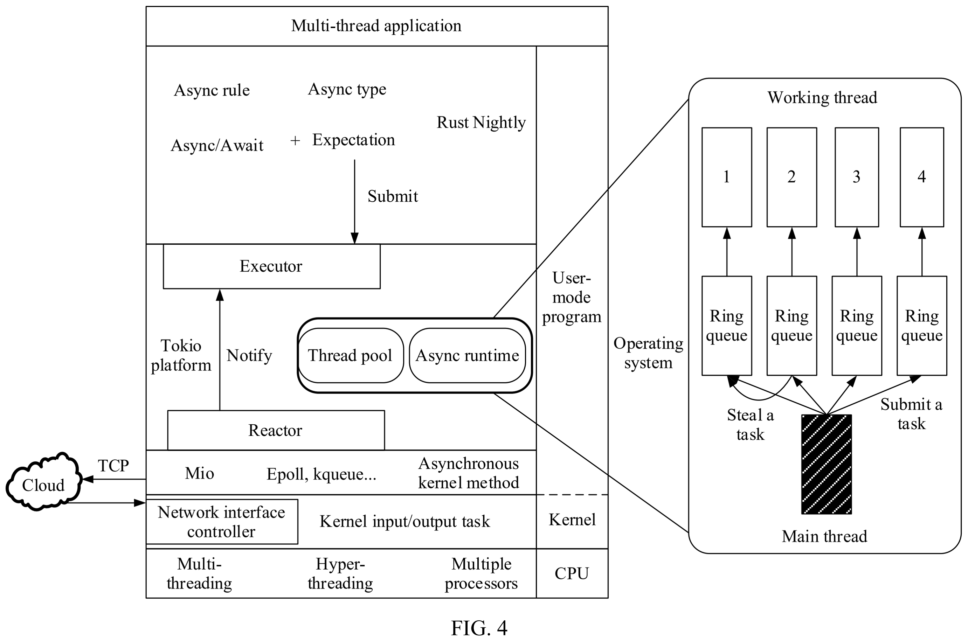

For example, FIG. 4 is a diagram of a lightweight thread application scenario. As shown in the figure, in Linux, network communication is performed by relying on a Tokio asynchronous input/output (Input/Output, I/O) component. An asynchronous runtime includes related components of the task stealing method provided in this application. Service requests are processed and scheduled through the asynchronous runtime in a black box. When reaching the current system, the service requests are placed in ring queues as tasks. Then, a working thread takes out a task from another ring queue for processing. If the current ring queue is empty, the working thread attempts to steal the task from the another ring queue to achieve load balancing.

The following describes the task stealing method provided in this application in detail with reference to the accompanying drawings. Herein, an example in which a processor core 1 and a processor core 2 shown in FIG. 2 perform task stealing is used for description. For other processor cores, refer to related descriptions of the processor core 1 and the processor core 2.

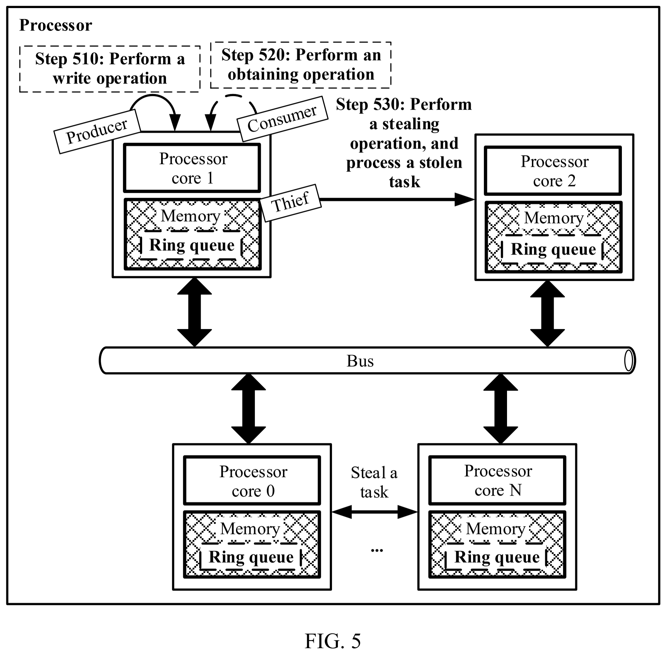

FIG. 5 is a schematic flowchart of a task stealing method according to this application. As shown in FIG. 5, the method includes the following steps.

**Step 510: The processor core 1 performs a write operation on a block in a ring queue associated with the processor core 1.**

To perform block management on the ring queue associated with the processor core 1, the processor core 1 sets a position identifier for each block in the ring queue. The position identifier indicates a start position in which a write operation, an obtaining operation, and a stealing operation are performed on the block.

In some embodiments, the processor core 1 uses a front position (front position, f_pos) and a back position (back position, b_pos) to control the write operation and the obtaining operation on the block. The front position indicates a start position of data in the block. The back position indicates an end position of the data in the block.

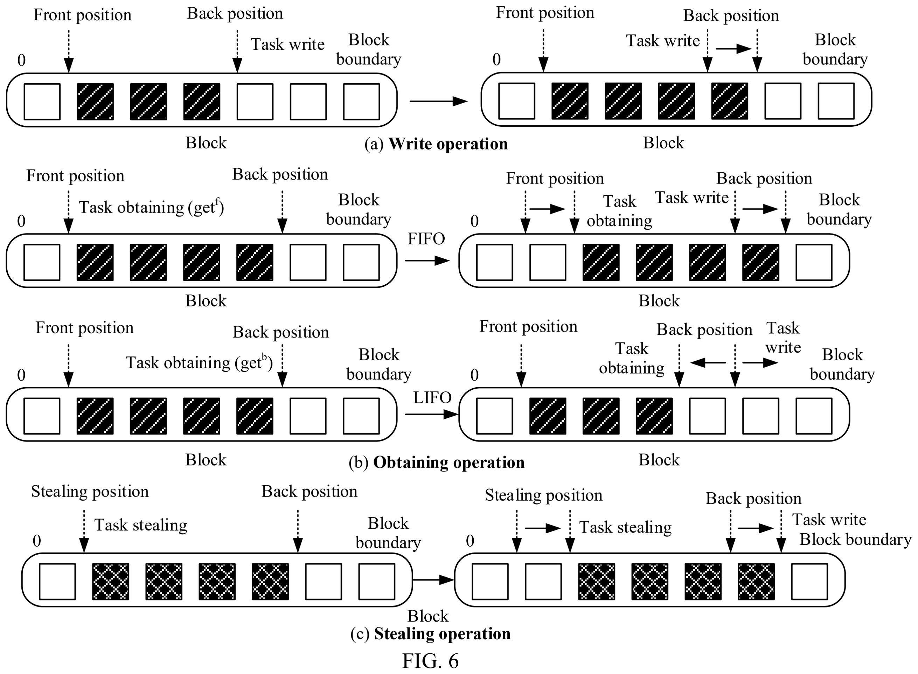

For example, as shown in (a) in FIG. 6, when the processor core 1 performs a write operation on a block, the processor core 1 serves as a producer, and determines whether a front position reaches a block boundary (number of entries, NE). If the front position does not reach the block boundary, it indicates that the write operation is allowed to be performed on the block, and the block has write permission; or if the front position reaches the block boundary, it indicates that the write operation is not allowed to be performed on the block, the block does not have the write permission, and block_done is returned. Further, it is determined whether a back position reaches the block boundary. If the back position does not reach the block boundary, a task is written into the block based on a position indicated by the back position, and the back position points to a next intra-block entry (entry); or if the back position reaches the block boundary, inter-block migration is performed, and the write operation is performed on a next block based on a front position and a back position of the next block.

**Step 520: The processor core 1 performs the obtaining operation on the block in the ring queue associated with the processor core 1.**

After writing the task into the block in the ring queue, the processor core 1 may obtain the task from the block in the ring queue and execute the task. When performing the obtaining operation on the block in the ring queue, the processor core 1 switches the write permission of the block to obtaining permission, and the processor core 1 serves as a consumer to obtain the task from the block in the ring queue based on the front position and the back position.

The processor core 1 determines whether a front position reaches a block boundary. If the front position does not reach the block boundary, it indicates that the obtaining operation is allowed to be performed on a block, and the block has the obtaining permission; or if the front position reaches the block boundary, it indicates that the obtaining operation is not allowed to be performed on the block, the block does not have the obtaining permission, and block_done is returned. Alternatively, the processor core 1 determines whether a position indicated by the front position is the same as a position indicated by the back position. If the position indicated by the front position is the same as the position indicated by the back position (f_pos==b_pos), it indicates that the block is empty, and empty (empty) is returned; or if the position indicated by the front position is different from the position indicated by the back position, a task is obtained from the block in the ring queue.

For example, as shown in (b) in FIG. 6, based on a mode of obtaining a task from a block in the ring queue, two operations: get^{f} and get^{b} are separately used by the processor core 1. For tasking obtaining from a block of the ring queue based on an FIFO mode, the processor core 1 uses a front position as a current position (get^{f}) for task obtaining, uses an NE as a block boundary, and uses a back position as a boundary of available data. For tasking obtaining from a block of the ring queue based on an LIFO mode, the processor core 1 uses a back position as a current position (get^{b}) for task obtaining, uses 0 as a block boundary, and uses a front position as a boundary of available data.

When the processor core 1 completes task processing of all blocks in the ring queue, that is, the ring queue associated with the processor core 1 is empty, the processor core 1 steals, according to the task stealing method provided in this application, a task from a block in a ring queue associated with another processor core in the system, that is, performs step 530.

**Step 530: The processor core 1 performs the stealing operation on a block in a ring queue associated with the processor core 2, and processes a stolen task.**

To perform block management on the ring queue associated with the processor core 1, the processor core 1 sets a stealing position (stealing position, s_pos) and a stealing counter (stealing count, s_cnt) for each block in the ring queue. The stealing position indicates a stealing start position in which the stealing operation is performed on the block. The stealing counter indicates a number of completed task stealing.

When the ring queue associated with the processor core 1 is empty, and the processor core 1 performs the stealing operation on the block in the ring queue associated with the processor core 2, it indicates that there is contention between the stealing operation and the write operation for the block in the ring queue. The write permission of the block is switched to stealing permission, and the processor core 1 serves as a thief, steals, based on a stealing position, a task from a block that has the stealing permission and that is in the ring queue, and updates the stealing position and the stealing counter in the block.

For example, as shown in (c) in FIG. 6, the processor core 1 determines whether a stealing position reaches a block boundary. If the stealing position does not reach the block boundary, it indicates that the stealing operation is allowed to be performed on a block, and the block has the stealing permission; or if the stealing position reaches the block boundary, it indicates that the stealing operation is not allowed to be performed on the block, the block does not have the stealing permission, and block_done is returned. Alternatively, the processor core 1 determines whether a position indicated by the stealing position is the same as a position indicated by a back position. If the position indicated by the stealing position is the same as the position indicated by the back position (s_pos==b_pos), it indicates that the block is empty, and empty (empty) is returned; or if the position indicated by the stealing position is different from the position indicated by the back position, a next intra-block entry indicated by the stealing position is pointed and a task is stolen through an atomic operation (for example, CAS), and the stealing counter is updated through an atomic operation (for example, fetch and add (fetch and add, FAA)). If the CAS fails, conflict (conflict) is returned.

In some embodiments, this application provides a policy of selecting a ring queue of a plurality of pieces of data with a high probability by using a low-overhead mechanism with both performance and balanced load. Because a block-based ring queue is used in this application, there is an inherent feature of "middle stealable" in the ring queue. To be specific, after the ring queue is selected, a task may be stolen starting from an intermediate block, thereby improving flexibility of performing the stealing operation in the entire system.

Based on this, the processor core 1 selects a block of a to-be-stolen task in two phases. Phase 1: The processor core 1 selects one processor core from a plurality of processor cores based on a processor core selection mode; and phase 2: randomly selects a block of a to-be-stolen task from a ring queue associated with the processor core. When the block of the to-be-stolen task does not have the stealing permission, the processor core 1 performs the phase 1 and the phase 2 again until a block having the stealing permission is selected, and performs the stealing operation on the block having the stealing permission. The processor core selection mode includes any one of non-uniform memory access-aware (NUMA-aware) architecture, equal probability, and randomness.

For example, the processor core 1 selects a processor core 3 from the plurality of processor cores based on the processor core selection mode, and when a block 3 is randomly selected from a ring queue associated with the processor core 3, and the block 3 does not have the stealing permission, selects the processor core 2 from the plurality of processor cores based on the processor core selection mode, and randomly selects a block 1 from the ring queue associated with the processor core 2. Because the block 1 has the stealing permission, a task is stolen from the block 1.

The action of "randomly selecting a block and determining that the block is not empty" relates to only a read operation on metadata of one block, that is, determining that s_pos.idx<b_pos.idx in the block. Therefore, a probability that the thief conflicts with an owner is very low, and performance overheads of the action of "selecting a queue" can be greatly reduced.

In the FIFO mode, a random policy is used by default. A randomly selected block can be used as a start point for task stealing, which causes basically no overhead. After task stealing in the block is completed, a new round of random block selection is entered. In the LIFO mode, if the random policy is enabled, random sampling is performed and whether a ring queue is empty is determined to determine whether to perform stealing from the ring queue. Then, a task is stolen starting from a stack bottom (bottom) of the ring queue. After stealing in a block is completed, a task continues to be stolen from a next block.

In some other embodiments, to avoid a case in which a task that is not taken out of a block in the ring queue is overwritten by a new task that is written, or to avoid performing the obtaining operation and the stealing operation on a same task in the block, a round identifier (or referred to as a round variable) is set for each block in the ring queue block, and round control (round control) is used to control the write operation, the obtaining operation, and the stealing operation performed on the block in the ring queue.
(1) When the producer attempts to write an r^{th} round of task into a block, it is ensured that the consumer and the thief complete reading of an (r-1)^{th} round of task in the block, to ensure that the producer does not overwrite an unread task.
(2) When the consumer or the thief attempts to read an r^{th} round of task in a block, it is ensured that a round of the task written by the producer into the block is r, to prevent repeated reading of the task or reading of an unwritten task.

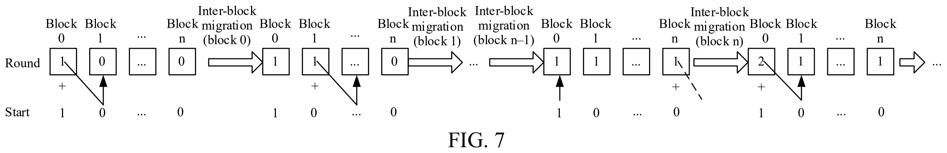

For example, FIG. 7 is a diagram of updating a round identifier according to this application. When an inter-block migration (adv_blk) operation is performed, the round variable is updated. When bₙ is wrapped back to b₀, a round variable corresponding to b₀ is increased by 1 (that is, b₀.round=bₙ.round+1, indicating that a new round is entered). In cases other than this, a round variable of a current block is directly assigned to a next block (that is, bₙ.round=bₙ₋₁.found).

For example, it is assumed that the processor core 1 performs the stealing operation on a block 2 in the ring queue associated with the processor core 2. When a stealing position of the block 1 in the ring queue associated with the processor core 2 indicates a block boundary of the block 1, task stealing is performed based on a stealing position and a round identifier in the block 2 adjacent to the block 1, and the round identifier of the block 2 is updated based on a round identifier of the block 1.

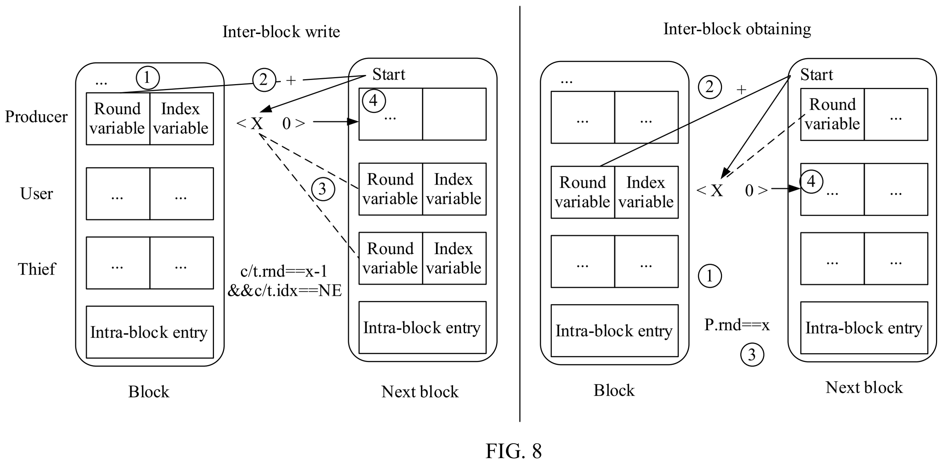

To implement the round control described above, an index variable idx and a round variable rnd are assigned to four pieces of metadata (the front position, the back position, the stealing position, and the stealing counter) of each block, and the index variable and the round variable may be 64-bit variables (which ensures that update of the two variables is atomic). The index variable and the round variable indicate metadata (f_pos) corresponding to the producer, metadata (f_pos in the LIFO mode and b_pos in the FIFO mode) corresponding to the consumer, and metadata (s_pos) corresponding to the thief in each block. For example, as shown in FIG. 8, a specific description is provided by using round control in the FIFO mode.

For the producer, when the index variable reaches a block boundary (step ①), inter-block migration (adv_blkₚᵤₜ) is performed, a round variable of a next block (nblk) is computed according to the previously mentioned method (step ②): x=blk.rnd+nblk.start, whether the consumer and the thief complete reading of an (x-1)^{th} round of task is checked (step ③): c/t.rnd==x-1 && c/t.idx==NE, and if the condition is satisfied, x and 0 are respectively written into the round variable and an index variable of the next block (step ④).

For the consumer, a case is similar. When it is determined whether a task in the next block can be obtained, a determining condition is different, and whether a round variable of a producer in the next block is equal to the value x only needs to be determined (step ③). If the round variable is equal to x, it indicates that there is a task in the next block that can be obtained.

It should be noted that, when the processor core encounters a case in which a block boundary is reached when performing the write operation, the obtaining operation, and the stealing operation, the processor core performs inter-block migration to move to a next block. First, whether the inter-block migration is allowed is checked based on the round variable. If inter-block migration is allowed, the following inter-block operation is performed, and corresponding metadata (front position, back position, stealing position, and stealing counter) is updated.

The following separately describes inter-block migration based on the LIFO mode and inter-block migration based on the FIFO mode by using examples.

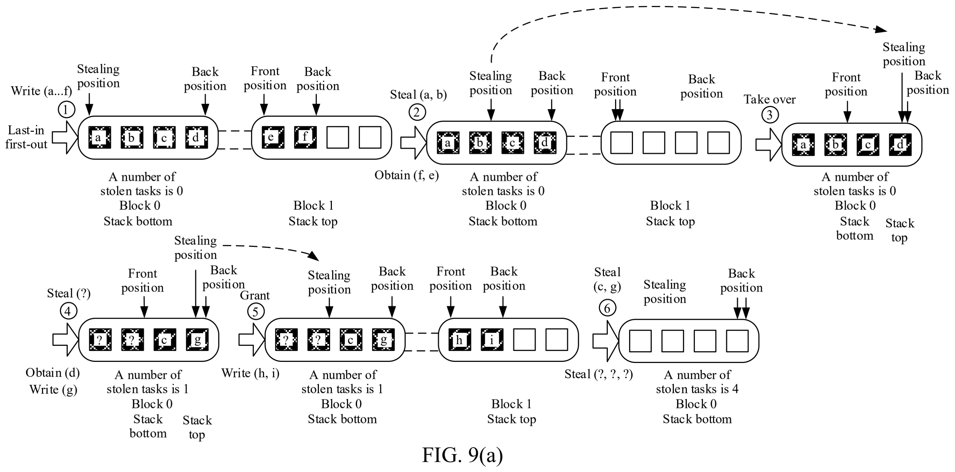

FIG. 9(a) is a diagram of the inter-block migration based on the LIFO mode. It is assumed that a ring queue includes a block 0 (b0) and a block 1 (b1).
(1) If a producer writes four tasks (a to d) into b0 and writes two tasks (e and f) into b1, grant (grant) is performed on b0, and write permission of b0 is switched to stealing permission, to allow a thief to perform a stealing operation on b0, allow the producer to perform a write operation on b1, and allow a consumer to perform an obtaining operation on b1. A value 4 and a value 2 are respectively assigned to back positions (b_pos) of b0 and b1, and initial values (state ①) are assigned to both a front position (f_pos) and a stealing position (s_pos).
(2) Two thieves respectively steal the task a and the task b from b0, update the stealing position in b0 to 2, and start to copy data. The consumer needs to obtain three tasks: the task f and the task e from b1, and updates the back position in b1 to a value 0 (state ②).
(3) Because there is no task in b1, inter-block migration (adv_blk_{get}) occurs, migration is performed from b1 to b0, takeover (takeover) is performed on b0, ownership of b0 is returned to the consumer, the stealing permission of b0 is switched to obtaining permission, a value 4 of a block boundary is assigned to the stealing position in b0, and the front position is set to the previous value 2 of the stealing position (state ③).
(4) The consumer obtains the task d from b0, and the producer writes a task g into b0. In this case, a previous stealing operation completes data copy (steal'), and a value 1 is assigned to a stealing counter (state ④).
(5) Because b0 is fully written, inter-block migration (adv_blkₚᵤₜ) occurs, migration is performed from b0 to b1, the producer writes a task h and a task i into b1, grant (grant) is performed on b0, and the write permission of b0 is switched to the stealing permission, to allow the thief to perform the stealing operation on b0. The value 2 of f_pos is assigned to the stealing position (state ⑤).
(6) The thief steals the task c and the task g from b0, and finally completes stealing of the remaining three tasks (c, g, and b/a) from b0. In this case, the value of the stealing position is updated to a value 4, which is equal to the value of the block boundary (state ⑥).

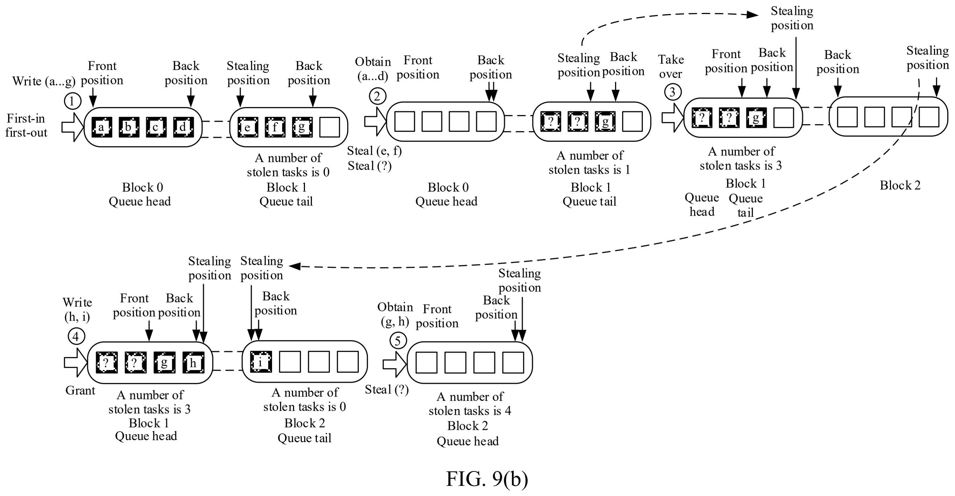

FIG. 9(b) is a diagram of the inter-block migration based on the FIFO mode. It is assumed that a ring queue includes a block 0 (b0), a block 1 (b1), and a block 2 (b2).
(1) If a producer writes four tasks (a to d) into b0 and writes three tasks (e to g) into b1, a consumer is allowed to perform an obtaining operation on b0, grant is performed on b1, and write permission of b1 is switched to stealing permission, to allow a thief to perform a stealing operation on b1, and allow the producer to perform a write operation on b1. A value 4 and a value 3 are respectively assigned to back positions of b0 and b1, and a value 0 is assigned to a stealing position (state ①).
(2) Two thieves respectively steal the task e and the task f from b1, update the stealing position in b1 to 2, and start to copy data. A stealing operation completes data copy (steal') earlier, and a value 1 is assigned to a stealing counter. In addition, the consumer obtains all the tasks a to d from b0 (state ②).
(3) A front position in b0 reaches a block boundary, inter-block migration (adv_blk_{get}) occurs, takeover is performed on b1, ownership of b1 is returned to the consumer, and the stealing permission of b1 is switched to obtaining permission. Similar to the LIFO mode, a value 4 of the block boundary is first assigned to the stealing position in b1, a front position is set to the previous value 2 of the stealing position, and a difference between the block boundary and the front position needs to be added to the stealing counter, that is, s_cnt+=(block_size-f_pos)=3 (state ③). In this way, after all stealing operations are completed, the stealing counter is equal to the value of the block boundary.
(4) The producer writes a task h into b1, inter-block migration (adv_blkₚᵤₜ) occurs, migration is performed from b1 to b2, a task i is written into b2, grant is performed on b2, and the write permission of b2 is switched to the stealing permission, to allow the thief to perform the stealing operation on b2 (state ④).
(5) The consumer obtains the task g and the task h from b1, the remaining stolen task is also completed, and the value 4 of the block boundary is assigned to both the front position and the stealing counter (state ⑤). Then, the producer determines, based on the values of the metadata, whether a new task can be placed into the block.

According to the task stealing method provided in this application, block management is performed, by using a block management mechanism, on the ring queue associated with the processor core, so that "middle stealable" of the ring queue is implemented, that is, the task is allowed to be stolen starting from the block that has the stealing permission and that is in the ring queue, and the write operation or the obtaining operation may also be performed on another block in the ring queue, to ensure that the stealing operation and the obtaining operation are not performed on a same block. In addition, "global metadata" is changed into "intra-block metadata", to reduce a possibility of contention between the owner and the thief, thereby improving system performance and reliability of task stealing.

The following describes related implementation code of the task stealing method provided in this application by using examples.

Program 1: Pseudo-code of the write operation, the obtaining operation, and the top-level operation of the stealing operation.

| | | | |
|---|---|---|---|
| 1 | bool queue<E>::put(E e) { | 22 | goto again: |
| 2 | again: | 23 | else return null; |
| 3 | blk=blk_to_put(); | 24 | } |
| 4 | switch(blk.put(e)) | 25 | E queue<E>::steal(){ |
| 5 | case success(): | 26 | b=decide(); |
| 6 | return true; | 27 | if(!b) return null; |
| 7 | case blk_done(rnd): | 28 | again: |
| 8 | if(adv_blkₚᵤₜ(blk,rnd)) | 29 | v, blk=blk_to_steal(); |
| 9 | goto again; | 30 | switch(blk.steal()) |
| 1 0 | else return false; | 31 | case success(e): |
| 11 | } | 32 | return e; |
| 12 | E queue<E>::get(){ | 33 | case empty: |
| 13 | again: | 34 | return null; |
| 14 | blk=blk_to_get(); | 35 | case conflict: |
| 15 | switch(blk.get()) | 36 | goto again; |
| 16 | case success(e): | 37 | case blk_done(rnd): |
| 17 | return e; | 38 | if(adv_blkₛₜₑₐₗ(v, |
| 18 | case empty: | 39 | blk,rnd)) |
| 19 | return null; | 40 | goto again; |
| 20 | case blk_done(rnd): | 41 | else return null; |
| 21 | if(adv_blk_{get}(blk,rnd)) | 42 | } |

A first step of the three operations is to select a block for performing an operation (line 3, line 14, and line 27). After the block is selected, a fast path is executed for each operation (line 4, line 15, and line 28), and the following three results may be returned:
(1) Success (lines 5, line 16, and line 29): True (true) is returned for the write operation, and values are returned for the obtaining operation and the stealing operation.
(2) Failure: may be caused by an empty queue (line 18 and line 31), and in this case, null (null) is returned for the obtaining operation and the stealing operation. Alternatively, the stealing operation conflicts with the write operation or the obtaining operation (line 33), and in this case, the stealing operation chooses to retry (line 34).
(3) The intra-block operation reaches a block boundary (line 7, line 20, and line 35). To be specific, for the write operation, the data in the block is full, and for the obtaining operation and stealing operation, the data in the block is empty. In this case, the inter-block migration (adv_blk) operation is performed (line 8, line 21, and line 36) to go to the next block. If the inter-block migration operation succeeds, retry is performed (line 9, line 22, and line 38). Otherwise, false (false) or null (null) is returned (line 10, line 23, and line 39).

The following describes the task stealing method provided in this application by using examples.

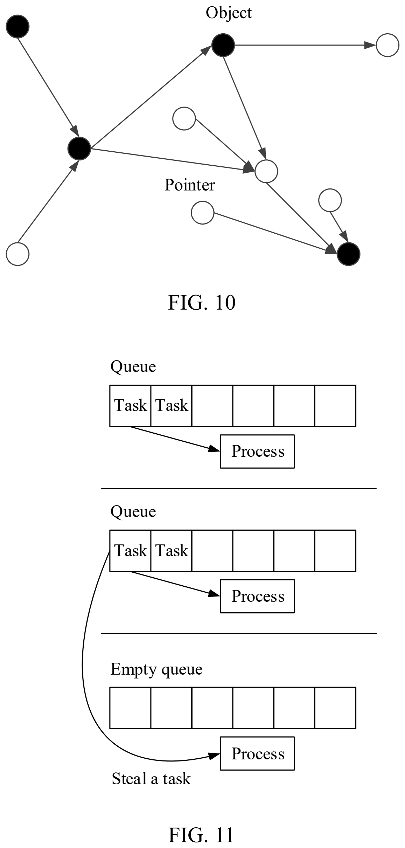

Example 1: Garbage collection (garbage collection, GC) is an important component in a high-level language. For example, in Java, a user creates a large number of objects (object) in different threads, and performs garbage collection after use to reclaim the threads. Based on a pointing relationship and a creation relationship, a to-be-reclaimed object may be abstracted as a graph in which a target is a vertex and a pointer (pointer) is an edge, as shown in FIG. 10. During memory reclamation, the graph needs to be traversed a plurality of times to find an unnecessary target for reclamation. To reduce impact of a reclaiming operation on application performance, traversal usually needs to be completed by a plurality of working threads together to reduce a delay of the traversal. Because numbers of targets created by different threads may be unbalanced, there is a load balancing problem herein. Currently, a most common solution in the industry is to use a task stealing mechanism. To be specific, in a graph traversal process, each working thread puts a successor of a currently traversed point into a ring queue of the working thread, and after the point is traversed, the successor is taken out of the ring queue for traversal. If the current working thread does not have a point that needs to be traversed, a stealing operation is performed, and a task is taken out of a ring queue owned by another working thread.

In Java GC, the original task stealing solution is replaced with the solution of this application, and 25 common cases are tested. Compared with that of the original solution, performance of this application is improved in 17 tests on the x86 platform, with an average improvement of 3.55% and a maximum improvement of 25.3%. On the ARM platform, the performance is improved in 18 tests, with an average improvement of 5.20% and a maximum improvement of 17.2%.

Example 2: In a lightweight thread scenario (for example, Goroutine), a user creates a large number of tasks (namely, lightweight threads) and executes the tasks on a plurality of cores. Because task execution duration is unknown, a load balancing problem between the plurality of cores is usually resolved in a dynamic allocation manner. As shown in FIG. 11, in an efficient execution manner, a ring queue (run queue) is allocated to each core, and a task is obtained from the ring queue for execution. If a ring queue is empty, a task is stolen from another ring queue for execution. A core component in the lightweight thread scenario herein is a task stealing mechanism.

After the run-queue in the Go language is replaced, a performance test is performed in the go-json library benchmark. Compared with that of the original solution, average performance of this application is improved by 25.8% in the x86 scenario, and the average performance is improved by 28.2% in the ARM scenario.

A core idea of this application is to perform block storage on the ring queue in bottom-level logic of the task stealing mechanism, and separate the intra-block operation from the inter-block operation. Block division and separation bring the following benefits in many aspects.

First, the block division changes the "global metadata" in the original solution to the "intra-block metadata", greatly reducing a possibility of contention between the owner and the thief, thereby reducing synchronization overheads.

Second, the separation ensures system correctness through a small number of synchronization operations in the inter-block operations and delicate round control. In addition, a fast path close to a throughput of a serial queue is executed in most time periods, so that overall performance approaches a theoretical optimal value.

Third, the block division improves modularity of ring queue design and implementation, and brings benefits to formal verification of block division logic, so that step-by-step verification can be performed.

Fourth, the block division enables the thief to "steal from the middle of the ring queue". This reduces the probability of competition between the owner and the thief, and provides more optimization space for the stealing policy.

The block division and separation method may also be applied to a GPU (or CPU-GPU) heterogeneous computing scenario and a scheduler in a high-performance computing scenario in the future. These scenarios all strongly depend on the task stealing mechanism. In addition, for some other scenarios in which data structures are serially accessed in most cases, and need to be concurrently accessed only in a few cases, design and implementation may also be performed with reference to the method in this application.

The block division mechanism poses higher challenges to implementation of correctness of the ring queue. Especially in hardware of the weak memory model, problems such as how to correctly use minimum memory barriers, how to perform correct and efficient concurrency control, and how to ensure that logical behavior of the ring queue with such high complexity meets an expectation need to be resolved through a set of formal methods.

In this application, a model checking (model checking) tool of GenMC is used, and can verify, through traversal, that all possible paths meet predefined properties such as memory security, termination, and a user-defined assertion (assertion). A test case (for example, a program 2) is carefully constructed. The case has three threads and can trigger all contention scenarios that can be considered. The model checking tool GenMC is used to check the case, and a memory barrier in the case is optimized through the VSync framework.

Program 2: test code for formal verification.

| | | | |
|---|---|---|---|
| 1 | class stat { | 17 | data = q.steal(buf); |
| 2 | u64 sum=0, buf=1; | 18 | if (data != null) |
| 3 | void put(queue<u64> q) { | 19 | sum += data; |
| 4 | if (q.put(buf)) | 20 | } |
| 5 | sum += buf ; | 21 | } |
| 6 | buf <<= 1; | 22 | stat f, b, s1, s2; |
| 7 | } | 23 | queue<u64> q; // 2 * 2 |
| 8 | bool get (queue<u64> q) { | 24 | T0: b.put(q)*3; f .get(q)*2; |
| 9 | data = q.get(buf); | 25 | b.put(q)*4; f .get(q)*3; |
| 10 | if (data != null) { | 26 | b.put(q)*5; f.get(q)*4; |
| 11 | sum += data; | 27 | T1: s1.steal(q); |
| 12 | return true; | 28 | T2: s2.steal(q)*2; |
| 13 | } | 29 | T3: while (f.get(q)); |
| 14 | return false; | 30 | assert (b.sum == f.sum + |
| 15 | } | 31 | s1.sum + s2. sum) ; |
| 16 | void steal (queue<u64> q){ | 32 | (T0 ∥ T1∥ T2) ; T3 |

Implementation of the solution in this application in the LIFO and FIFO modes is verified and optimized, and ABP in the LIFO solution in the industry is verified. Table 1 is final verification and optimization results. #SEQ indicates a sequential barrier (sequential barrier), and performance overheads are the largest. #ACQ and #REL respectively indicate an acquire barrier and a release barrier, and performance overheads are less than those of #SEQ. #RLX indicates a relaxed barrier with basically no performance overhead (equivalent to common memory access). The <#SEQ, #ACQ, #REL, #RLX> indicates a number of barriers. In the original ABP solution, all barriers of a write operation, an obtaining operation, and a steal operation are <4, 3, 1, 7>, while those in the LIFO solution and the FIFO solution in this application are respectively <0, 2, 2, 14>, and <0, 3, 3, 16>. In addition, in the original ABP solution, a number of barriers related to an owner is <2, 1, 1, 0> while in this application, barriers related to a fast path of an owner are <0, 0, 0, 5> in the LIFO mode, and <0, 1, 0, 4> in the FIFO mode.

**Table 1**

| | Verification/Optimization time | Memory barrier | | | | Executions explored (executions explored) |
|---|---|---|---|---|---|---|
| | | #SEQ | #ACQ | #REL | #RLX | |
| LIFO solution | 62 minutes | 0 | 2 | 2 | 14 | 1.39 million times |
| FIFO solution | 53 minutes | 0 | 3 | 3 | 16 | 1.43 million times |
| ABP | 16 minutes | 4 | 3 | 1 | 7 | 2.05 million times |

The formal verification method based on the model checking also ensures that the current barrier optimization result is optimal. No matter which barrier (barrier) is weakened, a counter example can be found. In addition, the test case is added to four threads, and GenMC and VSync are used to perform verification three days (nearly 200 million execution paths). Finally, the verification succeeds, which further proves correctness of algorithm implementation in this application.

Based on experience in the formal verification in this application, it is considered that as hardware complexity increases (for example, weak memory ordering, a concurrency mechanism, and consistency synchronization), software becomes increasingly complex. In this case, a series of practical formal methods used in this application can provide a more aggressive and reliable performance optimization possibility while ensuring a complex software design and implementation correctness.

It may be understood that, to implement functions in the foregoing embodiments, the processor includes a corresponding hardware structure and/or software module for performing the functions. A person skilled in the art should be easily aware that, with reference to units and method steps of the examples described in embodiments disclosed in this application, this application can be implemented by hardware or a combination of hardware and computer software. Whether a function is performed by hardware or hardware driven by computer software depends on particular application scenarios and design constraints of the technical solutions.

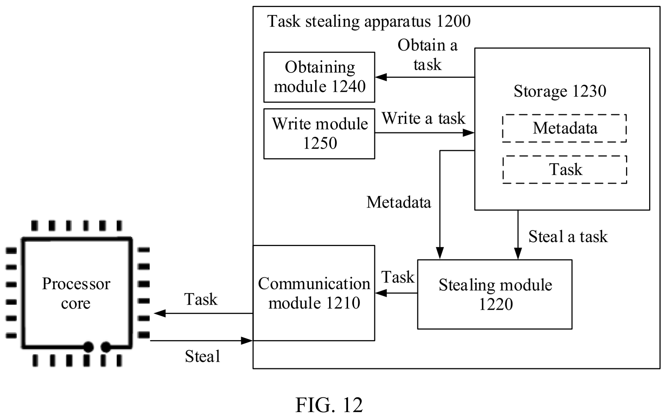

The foregoing describes in detail the task stealing method provided in embodiments with reference to FIG. 1 to FIG. 11. The following describes a task stealing apparatus provided in an embodiment with reference to FIG. 12.

FIG. 12 is a diagram of a structure of a possible task stealing apparatus according to this application. The task stealing apparatus may be configured to implement the functions of the processor core in the foregoing method embodiments, and therefore can also achieve beneficial effect of the foregoing method embodiments. In this embodiment, the task stealing apparatus may be the processor core shown in FIG. 5, or may be a module (for example, a chip) used in a server.

As shown in FIG. 12, the task stealing apparatus 1200 includes a communication module 1210, a stealing module 1220, and a storage 1230. The task stealing apparatus 1200 is configured to implement the functions of the processor core in the method embodiment shown in FIG. 5.

The communication module 1210 is configured to transmit a task.

The stealing module 1220 is configured to: when a ring queue associated with a first processor core is empty, steal a to-be-processed first task from a first block that has stealing permission and that is in a ring queue associated with a second processor core, and process the first task. For example, the stealing module 1220 is configured to perform step 530 in FIG. 5.

Optionally, the stealing module 1220 is further configured to steal the first task based on a stealing position in the first block, where the stealing position indicates a stealing start position in the first block.

Optionally, the stealing module 1220 is further configured to: select the second processor core from the plurality of processor cores based on a processor core selection mode, and randomly select the first block from the ring queue associated with the second processor core for stealing the first task.

The storage 1230 is configured to store metadata and a task of a block in the ring queue, so that the stealing module 1220 steals the task. The storage 1230 may include a cache and a memory.

The task stealing apparatus 1200 further includes an obtaining module 1240 and a write module 1250. The obtaining module 1240 is configured to: switch the stealing permission of the first block to obtaining permission based on an obtaining request; and obtain a to-be-processed second task from the first block based on a front position and a back position in the first block, where the front position and the back position indicate an obtaining position.

The write module 1250 is configured to: write the first task and the second task into the first block based on the back position of the first block, and switch write permission of the first block to the stealing permission, where the back position indicates a write position.

It should be understood that task stealing apparatus 1200 in this embodiment of this application may be implemented by using an application-specific integrated circuit (application-specific integrated circuit, ASIC), or a programmable logic device (programmable logic device, PLD). The PLD may be a complex programmable logic device (complex programmable logic device, CPLD), a field programmable gate array (field programmable gate array, FPGA), generic array logic (generic array logic, GAL), or any combination thereof. Alternatively, when the task stealing method shown in FIG. 5 may be implemented by software, the task stealing apparatus 1200 and the modules of the task stealing apparatus 1200 may alternatively be software modules.

The task stealing apparatus 1200 in this embodiment of this application may correspondingly perform the method described in embodiments of this application. In addition, the foregoing and other operations and/or functions of the units in the task stealing apparatus 1200 are used to implement corresponding procedures of the method in FIG. 5. For brevity, details are not described herein again.

This application further provides a computer system. The computer system includes a plurality of computer devices, the computer device includes a plurality of processor cores, and the processor cores in the plurality of computer devices are configured to perform the operation steps of the methods in the foregoing embodiments.

The method steps in embodiments may be implemented in a hardware manner, or may be implemented by executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a computing device. Certainly, the processor and the storage medium may alternatively exist in the computing device as discrete components.

All or a part of the foregoing embodiments may be implemented by software, hardware, firmware, or any combination thereof. When software is used to implement embodiments, all or a part of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A task stealing method, wherein a computer device comprises a plurality of processor cores, the plurality of processor cores comprise a first processor core and a second processor core, and the method comprises:
when a ring queue associated with the first processor core is empty, stealing a to-be-processed first task from a first block that has stealing permission and that is in a ring queue associated with the second processor core, and processing the first task, wherein the ring queue associated with the second processor core comprises a plurality of blocks, and a block having the stealing permission and a block having obtaining permission in the plurality of blocks are not a same block.

2. The method according to claim 1, wherein stealing the to-be-processed first task from the first block that has the stealing permission and that is in the ring queue associated with the second processor core comprises:
stealing the first task based on a stealing position in the first block, wherein the stealing position indicates a stealing start position in the first block.

3. The method according to claim 1 or 2, wherein stealing the to-be-processed first task from the first block that has the stealing permission and that is in the ring queue associated with the second processor core comprises:
selecting the second processor core from the plurality of processor cores based on a processor core selection mode, wherein the processor core selection mode comprises any one of non-uniform memory access-aware NUMA-aware architecture, equal probability, and randomness; and
randomly selecting the first block from the ring queue associated with the second processor core for stealing the first task.

4. The method according to claim 3, wherein selecting the second processor core from the plurality of processor cores based on the processor core selection mode comprises:
selecting a third processor core from the plurality of processor cores based on the processor core selection mode; and
when a third block is randomly selected from a ring queue associated with the third processor core, and the third block does not have the stealing permission, selecting the second processor core from the plurality of processor cores based on the processor core selection mode.

5. The method according to any one of claims 2 to 4, wherein after stealing the to-be-processed first task from the first block that has the stealing permission and that is in the ring queue associated with the second processor core, the method further comprises:
updating, by the first processor core, the stealing position and a stealing counter in the first block, wherein the stealing counter indicates a number of completed task stealing.

6. The method according to any one of claims 2 to 5, wherein stealing the first task based on the stealing position in the first block comprises:
when a stealing position of a second block in the ring queue associated with the second processor core indicates a block boundary of the second block, stealing the first task based on the stealing position and a round identifier in the first block adjacent to the second block.

7. The method according to claim 6, wherein the method further comprises:
updating the round identifier of the first block based on a round identifier of the second block.

8. The method according to any one of claims 1 to 7, wherein the method further comprises:
switching, by the second processor core, the stealing permission of the first block to the obtaining permission based on an obtaining request; and
obtaining, by the second processor core, a to-be-processed second task from the first block based on a front position and a back position in the first block, wherein the front position and the back position indicate an obtaining position.

9. The method according to any one of claims 1 to 8, wherein before stealing the to-be-processed first task from the first block that has the stealing permission and that is in the ring queue associated with the second processor core, the method further comprises:
writing, by the second processor core, the first task and the second task into the first block based on the back position of the first block, and switching write permission of the first block to the stealing permission, wherein the back position indicates a write position.

10. A task stealing apparatus, used in a computer device, wherein the computer device comprises a plurality of processor cores, the plurality of processor cores comprise a first processor core and a second processor core, and the apparatus comprises:
a stealing module, configured to: when a ring queue associated with the first processor core is empty, steal a to-be-processed first task from a first block that has stealing permission and that is in a ring queue associated with the second processor core, and process the first task, wherein the ring queue associated with the second processor core comprises a plurality of blocks, and a block having the stealing permission and a block having obtaining permission in the plurality of blocks are not a same block.

11. The apparatus according to claim 10, wherein when stealing the to-be-processed first task from the first block that has the stealing permission and that is in the ring queue associated with the second processor core, the stealing module is specifically configured to:
steal the first task based on a stealing position in the first block, wherein the stealing position indicates a stealing start position in the first block.

12. The apparatus according to claim 10 or 11, wherein when stealing the to-be-processed first task from the first block that has the stealing permission and that is in the ring queue associated with the second processor core, the stealing module is specifically configured to:
select the second processor core from the plurality of processor cores based on a processor core selection mode, wherein the processor core selection mode comprises any one of non-uniform memory access-aware NUMA-aware architecture, equal probability, and randomness; and
randomly select the first block from the ring queue associated with the second processor core for stealing the first task.

13. The apparatus according to claim 12, wherein when selecting the second processor core from the plurality of processor cores based on the processor core selection mode, the stealing module is specifically configured to:
select a third processor core from the plurality of processor cores based on the processor core selection mode; and
when a third block is randomly selected from a ring queue associated with the third processor core, and the third block does not have the stealing permission, select the second processor core from the plurality of processor cores based on the processor core selection mode.

14. The apparatus according to any one of claims 11 to 13, wherein the stealing module is further configured to:
update the stealing position and a stealing counter in the first block, wherein the stealing counter indicates a number of completed task stealing.

15. The apparatus according to any one of claims 11 to 14, wherein when stealing the first task based on the stealing position in the first block, the stealing module is specifically configured to:
when a stealing position of a second block in the ring queue associated with the second processor core indicates a block boundary of the second block, steal the first task based on the stealing position and a round identifier in the first block adjacent to the second block.

16. The apparatus according to claim 15, wherein the stealing module is further configured to:
update the round identifier of the first block based on a round identifier of the second block.

17. The apparatus according to any one of claims 10 to 16, wherein the apparatus further comprises an obtaining module, and the obtaining module is configured to:
switch the stealing permission of the first block to the obtaining permission based on an obtaining request; and
obtain a to-be-processed second task from the first block based on a front position and a back position in the first block, wherein the front position and the back position indicate an obtaining position.

18. The apparatus according to any one of claims 10 to 17, wherein the apparatus further comprises a write module, and the write module is configured to:
write the first task and the second task into the first block based on the back position of the first block, and switch write permission of the first block to the stealing permission, wherein the back position indicates a write position.

19. A chip, comprising a processor and a power supply circuit, wherein the power supply circuit is configured to supply power to the processor, and the processor is configured to implement the method according to any one of claims 1 to 9.

20. A computer device, wherein the computer device comprises a processor and a memory, the processor comprises a plurality of processor cores, the memory is configured to store a group of computer instructions, and when the processor core executes the group of computer instructions, the method according to any one of claims 1 to 9 is implemented.
